# EUROPEAN PATENT SPECIFICATION

(11) **EP 3 372 575 B1**
(45) Date of publication and mention of the grant of the patent: **06.07.2022**
(21) Application number: 18160828.2
(22) Date of filing: 08.03.2018
(51) Int. Cl.: C04B 41/49, C04B 41/61

(54) **WATER-IN-OIL EMULSION COMPOSITIONS**
WASSER-IN-ÖL-EMULSIONSZUSAMMENSETZUNGEN
COMPOSITIONS D'ÉMULSION D'EAU DANS DE L'HUILE

(30) Priority: 09.03.2017 GB 201703823
(43) Date of publication of application: 12.09.2018
(73) Proprietor: Safeguard Europe Limited, Horsham, West Sussex RH13 5QL (GB)
(72) Inventor: Rirsch, Eric, Horsham RH13 5QL (GB); Walker, Clementine, Horsham RH13 5QL (GB); Kirby, Jonathan, Horsham RH13 5QL (GB)
(74) Representative: Greaves Brewster LLP

(56) References cited:
- EP-A1- 0 603 747
- EP-A1- 1 632 521
- EP-B1- 1 154 971
- WO-A1-2018/031854
- US-A- 4 631 207

## Description

### FIELD OF THE INVENTION

The present invention relates generally to emulsifier-free water-in-oil emulsion compositions, their preparation and use. More particularly, the present invention relates to emulsifier-free water-in-oil emulsion compositions, in the form of a cream, comprising an amino-functional siloxane polymer, which compositions are suitable for use in the hydrophobic treatment of building materials, especially wood and timber, to protect against moisture penetration

### BACKGROUND OF THE INVENTION

The use of silicone and silane compounds in the impregnation of building materials to protect against moisture penetration is well known in the art and compositions containing such organosilicon compounds have been commercially available for many years.

Generally, the silicone and silane compounds are formulated into fluid liquid solutions or emulsions which carry the active material to the surface and can impregnate the substrate of interest.

Solvent based solutions and water based emulsions are often used. The solutions and emulsions used are often in dilute form and suffer from the disadvantage that the applied liquid does not stay in place and runs off the surface to which it is applied, presenting a particular problem where the compositions are intended for application to vertical surfaces or ceilings.

Approaches to overcoming the disadvantages associated with known hydrophobing treatments for building materials which have been explored include the development of higher viscosity cream compositions.

Both oil-in-water and water-in-oil emulsion cream compositions for protecting building materials against moisture penetration have been described in the literature.

US 5962585 describes an aqueous cream comprising organosilicon compounds and one or more emulsifiers, among other ingredients, for hydrophobing building materials. In the compositions as described, it is reported that the high viscosity of the cream allows more material to be delivered to the surface in a single application as well as minimising run-off effects.

EP1154971B describes an aqueous oil-in-water firm cream containing silane and /or siloxanes with emulsifier and solvent for use in impregnating or priming mineral building materials to impart water repellency

EP 1679166 describes a wood preserving barrier cream based on an emulsion cream formed of an oil phase and a water phase with an emulsifier.

EP 1331239B describes hydrocarbon-free water-in-oil creams comprising organosilicon compounds and one or more emulsifiers of use in waterproofing building materials.

The requirement for the inclusion of an emulsifier in the above-mentioned hydrophobing compositions represents a considerable disadvantage, however, and limits their practical application. Not only does the addition of an emulsifier increase the number of steps involved in the process for preparing the composition but also, in use, the presence of emulsifier can lead to poor initial water beading on the surface and to the release of undesirable emulsifier chemicals into the environment.

Water-in-oil emulsions for cosmetic applications which are described as "emulsifier-free" are known in the art but it is notable that, in all cases, additional agents are added to cause the oil phase and water phase to blend together and stabilise the emulsions.

Examples of compositions comprising such agents are described, for example, in EP0686391B, which describes water-in-oil emulsions which are stabilised by polyalkylsilsequioxane particles and EP0969803B, which describes water-in-oil emulsions stabilised by micronized inorganic pigments. Emulsifier free emulsions which are stabilised by microfine solid particles (referred to in the art as Pickering emulsions) are described in EP0987002B. Water in oil emulsions stabilised by modified titanium dioxide particles are described in JP 2002146188A.

External surfactant free water-in-oil emulsions of organopolysiloxanes for cosmetic applications are described in WO 2015/104176A1 but in this case, the organopolysiloxane is self-emulsifying and must bear surfactant groups such as polyoxyalkylene polyethers, long chain alkyl groups and oxygen containing hydrophilic groups to promote dispersal of the oil phase in the water phase.

US 2003/0053975 describes water-in-oil emulsions which contain amino-functional organopolysiloxanes but no additional emulsifiers. These emulsions are intended for use in a variety of applications, particularly as car polishes or for cleaning ceramic hobs. In the exemplified compositions, the amino-siloxane is present in an amount of at least 10% by weight. Such high levels of amino siloxane do not present difficulties where, as in US 2003/0053975, the product is largely removed from the surface in use (for example through the action of polishing or cleaning); for surface treatments of building material surfaces, however, such high levels of amino siloxane would be disadvantageous as they can leave a residue on the substrate surface.

There remains a continuing need for the development of compositions for use in the hydrophobic treatment of building material surfaces which are stable, easily prepared and applied, do not leave visible residue or discolouration, do not run off when applied to vertical surfaces or ceilings and which are not readily washed off by the rain.

Water-in-oil emulsions are advantageous compared to oil-in-water emulsions in view of their application as they are not readily water washable or dilutable and impart barrier protection to resist rainfall immediately after application. The development of stable water-in oil organosilicon containing compositions which avoid the need for emulsifiers therefore remains a particular objective.

### SUMMARY OF THE INVENTION

The present invention is concerned with an emulsifier-free water-in-oil emulsion composition comprising an amino-functional siloxane polymer, its preparation and its use in the hydrophobic treatment of building materials,

According to a first aspect, the present invention provides an emulsifier-free water-in-oil composition comprising:-
(i) an amino-functional siloxane polymer;
(ii) an ionic salt in an amount of up to 5% by weight of the composition; and
(iii) water in an amount of at least 50% by weight of the composition,
wherein the composition is in the form of a cream

In further aspects, the invention also provides a method for the preparation of a composition according to the first aspect of the invention as well as the use of such a composition in the hydrophobic treatment of building materials.

The present inventors have found that by means of the invention, stable emulsifier-free water in oil compositions for use in the hydrophobic treatment of building materials may be provided. The properties of the compositions are such that when applied to a vertical surface of a building material, they tend to remain in place rather than running down the surface.

### DETAILED DESCRIPTION OF THE INVENTION

The present invention is concerned with emulsifier-free water-in-oil emulsion compositions which are suitable for use in hydrophobic treatment of building materials to impart water repellency.

As used herein, the term "emulsifier-free" is intended to exclude conventional emulsifiers known in the art for use in water-in-oil emulsions (for example cationic and anionic surfactants, sorbitan esters, siloxanes modified with ethoxylate groups and long chain alkyls) as well as compounds whose function is to stabilise the emulsion and help it form, regardless of whether they are conventionally referred to as emulsifiers.

Furthermore, in describing "emulsifier-free", Pickering emulsions, in which the emulsion is stabilised by solid particles which adsorb onto the interface between the water and oil phases, are excluded from the scope of the present invention. Examples of such particles include polyalkylsilsequioxane particles, micronized inorganic pigments and by microfine solid particles as described above.

As used herein, a siloxane polymer comprises oligomers or polymers of alternating silicon and oxygen atoms. Organic side groups such as methyl or phenol are attached to one or more silicon atoms in the chain.

An amino-functional siloxane polymer is a siloxane polymer in which the organic side groups attached to the silicon atoms in the polymer chain are substituted by one or more amino groups.

The amino-functional siloxane polymer for use in the invention may be any amino-functional siloxane polymer conventional in the hydrophobing art.

In one embodiment, the degree of substitution of nitrogen in the amino-functional siloxane polymer is in the range 0.4% to 2% by weight nitrogen.

Amino-functional siloxane polymers for use according to the invention having a chemical group -OSiMe(CH₂)₃NH(CH₂)₂NH₂ or OSiMe(CH₂)₃NH₂ are particularly suitable. Such materials are supplied by KCC Basildon Chemicals as BC 99/009, by Dow Corning as 2-8566 aminofluid and by CHT as Hansa ADD 7045.

In one embodiment, the amino-functional siloxane polymer is present in an amount of less than 10% by weight of the composition, suitably in an amount of 5% or less by weight of the composition.

In one embodiment, the amino-functional siloxane polymer is present in an amount of 2% or less by weight of the composition, preferably in an amount of 1% by weight of the composition.

In the composition according to the invention, water is present in an amount of at least 50% by weight of the composition, preferably in an amount of at least 70% by weight of the composition, for example in an amount of between 75% to 85% by weight of the composition.

The emulsion compositions according to the invention have the consistency of a cream. A cream-like consistency is advantageous as the composition does not run off vertical surfaces and ceilings to which it is applied and it can easily be applied to the building material surface to be treated by conventional methods such as brushing or rolling.

Methods for preparing water-in-oil emulsions are well known in the art and any conventional method may be used to prepare the emulsion compositions of the present invention. Typically, the emulsion compositions according to the invention may be formed by mixing the amino-functional siloxane polymer with water, conveniently by high-shear mixing.

The amino-functional siloxane component may be combined with one or more additional components, conveniently before formation of the water-in-oil emulsion according to the invention. Depending on the nature of the additional component, this may be added to either the oil or water phase. It will be appreciated that any additional component must not adversely affect the ability of the amino-functional siloxane component and water to form a stable water-in-oil emulsion.

In one embodiment, the emulsifier-free water-in-oil composition according to the invention further comprises an amino-free siloxane polymer, typically in an amount of up to 5% by weight of the composition, for example up to 1% by weight of the composition. Any amino-free siloxane polymer conventional in the art may be used. Suitable amino-free siloxane polymer components for use according to the invention include, for example, silicone fluids which are hydroxyl-terminated. Particularly suitable amino-free siloxane polymers according to this aspect of the invention have a viscosity at 25°C of 20 to 500 mm²/s.

Examples of particularly suitable amino-free siloxane polymers which may be used include polydimethylsiloxane (available under the trade name BC 99/089 from KCC Basildon Chemicals) and dimethyl siloxane, trimethylsiloxy-terminated (available under the trade name Q7-9120 from Dow Corning) and alkyl-functionalised low viscosity silicone resin (available under the trade name MR-2404 also from Dow Corning). Where an amino-free siloxane polymer is present in the emulsion composition according to the invention, the combined total of the amino-functional siloxane polymer and amino-free siloxane polymer components is suitably less than 10% by weight of the composition, preferably less than 5% by weight of the composition. The present inventors have found that decreasing siloxane content is beneficial in reducing the presence of residue and discolouration on the substrate surface which is of particular importance for hydrophobic surface treatments.

In one particular embodiment, amino-free and amino-functional siloxane polymers are both present in the composition according to the invention in an amount of 1% by weight each.

Where an amino-free siloxane polymer is added, it is preferably included in the oil phase before mixing to form the emulsion.

The emulsifier-free water-in-oil composition according to the invention comprises an ionic salt compound.

The inclusion of an ionic salt in the composition according to the invention has been found to improve the storage stability of the emulsion.

In one embodiment, the ionic salt in the composition according to the invention is a salt containing a monovalent cation. Examples of suitable ionic salts which may be employed include sodium phosphate, sodium hydrogen phosphate, sodium chloride, sodium carbonate, sodium hydrogen carbonate, potassium nitrate and potassium chloride. Salts may also be present as part of a buffer system.

Conveniently, the ionic salt component is added to the water phase before mixing to form the emulsion according to the invention.

Thee ionic salt compound is present in an amount of up to 5% by weight of the composition according to the invention, preferably up to 2% by weight of the composition.

In a further embodiment, one or more silanes can be added to the oil phase, conveniently before mixing to form the emulsion, in order to assist with the spreading process and enhance the hydrophoboing effect of the composition according to the invention. Suitable silanes are alkylalkoxy types such as octyltriethoxysilane, propyltriethoxysilane, butyltriethoxysilane, although other silanes conventionally known in the art such as aminosilane may also be employed. When treating building materials, the present inventors have found that the incorporation of octyltriethoxysilane is particularly beneficial. Typically, the one or more silanes, if present, are present in an amount of up to 20% by weight of the composition.

Catalysing additives to promote bonding to chemical groups in the building material may also suitably be added.

In another embodiment, one or more solvents may be included, preferably in the oil phase before mixing. The present inventors have found that the addition of solvent facilitates the penetration of the active ingredient components of the emulsion into the pore structure of the substrate to be treated and can assist with controlling the rheology of the emulsion product. Suitable solvents include hydrocarbon solvents such as white spirit and C₁₁-C₁₄ isoalkanes.

The composition according to the invention may suitably comprise one or more pigments. Any pigment, organic or inorganic, known in the art may conveniently be used and may be added into the oil or water phase, or both.

Suitable water based pigments which may be used include coloured iron oxide type pigments. Suitable pigments include Aquacolours 601239, 601240and 601238 supplied by Sioen Chemicals, the Xfast pigments such as Xfast black 0063, Xfast Yellow 1916 (transparent iron oxide) and Xfast Red 2817 supplied by BASF. Suitable solvent based (oil phase) pigments are YELLOW 90230, RED 90231, BLACK 90279 supplied by Sioen Chemicals, and Red R7B-UK supplied by Keytec Colours.

In another embodiment, the composition according to the invention may suitably further comprise a biocide. Any conventional biocide may be used including, for example propiconazole (available commercially as A12TK-50 supplied by Lanxess), iodopropynyl butylcarbamate (available commercially as MP330 supplied by Lanxess) and a mixture of bronopol, 2-methyl-2H-isothiazol-3-one and 5-chloro-2-methyl-4-iso-thiazol-3-one (available commercially as Acticide LA 0614 supplied by Thor).

The emulsion compositions according to the invention are suitable for use in the hydrophobic treatment of building materials to protect against moisture penetration. The compositions may be used to treat a wide variety of building materials, including concrete, masonry, cement and bricks.

Wood is a common material used in the construction of buildings fences and garden furniture. The different species of wood exhibit a range of durability characteristics with typically the more rapidly grown softwoods showing sensitivity to the deleterious effects of moisture.

Commonly wood suffers from dimensional instability resulting from moisture wetting and drying processes. Cracking occurs and biological attack leads to unsightly surface growth and rotting processes.

The present inventors have found that the compositions of the present invention have particular application in the hydrophobic treatment of wood. The compositions offer good rain resistance so that they can be applied in inclement weather and surprisingly rapidly develop water beading on the surface giving aesthetically pleasing water beading results within a 24-hour period.

The water-in-oil compositions of the present invention may be applied to the substrate to be treated in any conventional manner. By way of example, compositions of the invention in cream form may suitably be applied to the surface of the building material of interest by means of a brush or roller.

Throughout the description and claims of this specification the words "comprise" and "contain" and variations of the words, for example "comprising" and "comprises", mean "including but not limited to", and do not exclude other components or steps.

As used herein, the singular encompasses the plural unless the context otherwise requires. In particular where the indefinite article is used, the specification is to be understood as contemplating plurality, as well as singularity, unless the context requires otherwise.

Preferred features of each aspect of the invention may be described in connection with any of the other aspects. The invention may be further illustrated by way of the following non-limiting examples.

### EXAMPLES

A series of water-in-oil emulsions were prepared according to the recipes listed in Table 1 by high shear mixing the listed components. After mixing the viscosity of the resultant mix was measured using a Brookfield DV-1 Viscometer. The storage stability of the prepared mix was then determined by storing in sealed containers at 40°C.

**Table 1: Prepared Recipes**

| | **Comparative Examples** | | | | **Examples** | | **Comparative Example** |
|---|---|---|---|---|---|---|---|
| | 1 | 2 | 3 | 4 | 5 | 6 | 7 |
| | Weight % | Weight % | Weight % | Weight % | Weight % | Weight % | Weight % |
| Water | 80.00 | 80.00 | 78.40 | 79.95 | 77.95 | 83.40 | 83.70 |
| Salt | 0.00 | 0.00 | 1.60 Na₂HPO₄ | 0.05 NaCl | 1.60 Na₂HPO₄ | 0.25 NaCl | 0.00 |
| Emulsifier (1) | 0.60 | 0.60 | 0.60 | 0.60 | 0.00 | 0.00 | 0.00 |
| Silane(2) | 19.40 | 18.40 | 18.40 | 19.40 | 19.40 | 8.90 | 8.90 |
| Solvent(4) | 0.00 | 0.00 | 0.00 | 0.00 | 0.00 | 5.40 | 5.40 |
| Amino-siloxane (3) | 0.00 | 1.00 | 1.00 | 0.00 | 1.00 | 1.00 | 1.00 |
| Amino-free siloxane (5) | 0.00 | 0.00 | 0.00 | 0.00 | 0.00 | 1.00 | 1.00 |
| Total | 100.00 | 100.00 | 100.00 | 100.00 | 100.00 | 100.00 | 100.00 |
| | | | | | | | |
| Viscosity | 1800 | 36000 | 121000 | 7200 | 95000 | 95000 | 138000 |
| Stability (days) | 1 | 1 | 27 | 1 | >150 | >150 | >56 |

Notes to Table 1:
(1) Surfacare S80 soap supplied by Surfachem Ltd
(2) SFT n-octyltriethoxysilane supplied by Dow Chemical
(3) BC 99/009 amino-siloxane supplied by KCC Basildon Ltd
(4) Solban IP185 C11-14 hydrocarbon solvent supplied by Samuel Banner Ltd
(5) BC 99/089 silicone fluid supplied KCC Basildon Ltd

The results demonstrate that emulsifier-free water-in-oil emulsions according to the invention (Examples 5, 6) show improved storage stability compared to the emulsions of Comparative Examples 1 to 4, which all include an emulsifier component.

The application characteristics of the above recipes were then tested. Panels of a 2-year weathered larch wood fence were treated by brush application of the compositions of the examples listed in Table 1 at a coverage rate of 500 g/m². Observations were made on the application and appearance as recorded in Table 2.

**Table 2: Application to Wood Substrates**

| **Example** | **Formula** | **Application observations** | **Extent of discolouration (24 hrs)** | **Beading after 24 hours** |
|---|---|---|---|---|
| 1 | Surfactant | Run-off | Low | no |
| 2 | Surfactant, amino | Run-off | Moderate | no |
| 3 | salt, surfactant, amino | Stays where applied | Moderate | no |
| 4 | salt, surfactant | Severe run-off | Low | no |
| 5 | salt, amino | Stays where applied | Moderate | yes |
| 6 | salt, amino | Stays where applied | Moderate | yes |
| Proprietory water-in-oil product | silane containing | Stays where applied | High | no |
| O/W (1) | solvent, silane, siloxane, surfactant in water | Stays where applied | High | no |
| O/W (2) | solvent, silane, siloxane, surfactant in water | Stays where applied | High | no |
| Untreated | n/a | n/a | None | no |

The results show that the creams of comparative examples 1 to 4 run-off the vertical surface in an uncontrolled way. No water beading was seen. Other recipes tested were a proprietary water-in-oil silane containing cream (Evonik Tegosivin HP830) and two proprietary oil-in-water creams. In all three of these cases no significant water beading was evident.

By comparison, the compositions of Examples 5 and 6 (according to the invention) remained in place when applied and did not run-off the vertical surface in an uncontrolled way. The extent of discolouration was moderate and good water beading was observed after testing at 24 hours.

The compositions of comparative Example 3 and Example 5 were also tested on masonry. The two recipes were applied to clay Fletton bricks using a brush at a coverage rate of 200 g/m². Following a curing period of 2 weeks observations were made regarding the beading and the extent of the hydrophobic zone within the brick and the results are shown in Table 3

**Table 3: Application to Masonry Substrates**

| **Comparative Example 3** | | **Example 5** | |
|---|---|---|---|
| Component | Weight% | Component | Weight% |
| Water | 78.40 | Water | 77.95 |
| Salt - Na₂HPO₄ | 1.60 | Salt - Na₂HPO₄ | 1.60 |
| Surfactant (1) | 0.60 | Surfactant (1) | 0.00 |
| Silane (2) | 18.40 | Silane (2) | 19.40 |
| Amino-siloxane (3) | 1.00 | Amino-siloxane (3) | 1.00 |
| Total | 100.0 | Total | 100.0 |
| | | | |
| Viscosity (new) | 121000 | Viscosity (new) | 95000 |
| Stability days | 27 | Stability days | >150 |
| Beading | No | Beading | Yes |
| Depth of hydrophobic zone | 1 mm | Depth of hydrophobic zone | 4 mm |

From the results presented in Table 3 it can be seen that no water beading was observed on the brick treated with the composition of Comparative Example 3 and the depth of the hydrophobic zone was also low at 1 mm. Upon application of the composition of Example 5 according to the present invention, however, good beading was observed and the hydrophobic zone extended to a depth of 4 mm.

## Claims

1. An emulsifier-free water-in-oil composition comprising:-
(i) an amino-functional siloxane polymer;
(ii) an ionic salt in an amount of up to 5% by weight of the composition; and
(iii) water in an amount of at least 50% by weight of the composition;
wherein the composition is in the form of a cream.

2. A composition according to claim 1, wherein the degree of substitution of nitrogen in the amino-functional siloxane polymer is in the range 0.4% to 2% by weight nitrogen.

3. A composition according to claim 1 or claim 2, wherein the amino-functional siloxane polymer comprises the group OSiMe(CH₂)₃NH(CH₂)₂NH₂ or OSiMe(CH₂)₃NH₂.

4. A composition according to any one of the preceding claims, wherein water is present in an amount of at least 70% by weight of the composition.

5. A composition according to any one of the preceding claims, wherein the ionic salt is present in an amount of up to 2% by weight of the composition.

6. A composition according to any one of the preceding claims, further comprising an amino-free siloxane polymer.

7. A composition according to claim 6, wherein the combined total of the amino-functional siloxane polymer and amino-free siloxane polymer components is less than 10% by weight of the composition.

8. A composition according to claim 6 or claim 7, wherein the amino-free siloxane polymer is polydimethylsiloxane.

9. A composition according to any one of the preceding claims, further comprising a silane.

10. A composition according to any one of the preceding claims, further comprising a hydrocarbon solvent.

11. A composition according to any one the preceding claims, further comprising one or more components selected from a pigment and a biocide.

12. Use of a composition according to any one of the preceding claims for the hydrophobic treatment of a building material.

13. Use of a composition according to claim 12 for the hydrophobic treatment of wood or timber.

14. A method for the hydrophobic treatment of a building material, comprising applying to said building material a composition according to any one of claims 1 to 11.

## Patentansprüche

1. Emulgatorfreie Wasser-in-ÖI-Zusammensetzung, umfassend:
(i) ein aminofunktionelles Siloxanpolymer,
(ii) ein ionisches Salz in einer Menge von bis zu 5 Gew.-% der Zusammensetzung und
(iii) Wasser in einer Menge von mindestens 50 Gew.-% der Zusammensetzung,
wobei die Zusammensetzung in Form einer Creme vorliegt.

2. Zusammensetzung nach Anspruch 1, wobei der Substitutionsgrad von Stickstoff in dem aminofunktionellen Siloxanpolymer im Bereich von 0,4 Gew.-% bis 2 Gew.-% Stickstoff liegt.

3. Zusammensetzung nach Anspruch 1 oder Anspruch 2, wobei das aminofunktionelle Siloxanpolymer die Gruppe OSiMe(CH₂)₃NH(CH₂)₂NH₂ oder OSiMe(CH₂)₃NH₂ umfasst.

4. Zusammensetzung nach einem der vorhergehenden Ansprüche, wobei Wasser in einer Menge von mindestens 70 Gew.-% der Zusammensetzung vorhanden ist.

5. Zusammensetzung nach einem der vorhergehenden Ansprüche, wobei das ionische Salz in einer Menge von bis zu 2 Gew.-% der Zusammensetzung vorhanden ist.

6. Zusammensetzung nach einem der vorangehenden Ansprüche, weiter ein aminofreies Siloxanpolymer umfassend.

7. Zusammensetzung nach Anspruch 6, wobei die kombinierte Gesamtmenge der aminofunktionellen Siloxanpolymer- und aminofreien Siloxanpolymer-Komponenten weniger als 10 Gew.-% der Zusammensetzung beträgt.

8. Zusammensetzung nach Anspruch 6 oder Anspruch 7, wobei das aminofreie Siloxanpolymer Polydimethylsiloxan ist.

9. Zusammensetzung nach einem der vorhergehenden Ansprüche, weiter ein Silan umfassend.

10. Zusammensetzung nach einem der vorhergehenden Ansprüche, weiter ein Kohlenwasserstoff-Lösemittel umfassend.

11. Zusammensetzung nach einem der vorhergehenden Ansprüche, weiter eine oder mehrere Komponenten, ausgewählt aus einem Pigment und einem Biozid, umfassend.

12. Verwendung einer Zusammensetzung nach einem der vorhergehenden Ansprüche zur Hydrophobierung eines Baumaterials.

13. Verwendung einer Zusammensetzung nach Anspruch 12 zur Hydrophobierung von Holz oder Nutzholz.

14. Verfahren zur Hydrophobierung eines Baumaterials, umfassend das Aufbringen einer Zusammensetzung nach einem der Ansprüche 1 bis 11 auf das Baumaterial.

## Revendications

1. Composition eau dans l'huile exempte d'émulsifiant comprenant :
(i) un polymère de siloxane à fonction amine ;
(ii) un sel ionique en une quantité allant jusqu'à 5 % en poids de la composition ; et
(iii) de l'eau en une quantité d'au moins 50 % en poids de la composition ;
dans laquelle la composition est sous la forme d'une crème.

2. Composition selon la revendication 1, dans laquelle le degré de substitution de l'azote dans le polymère de siloxane à fonction aminé est compris dans la plage de 0,4 % à 2 % en poids d'azote.

3. Composition selon la revendication 1 ou la revendication 2, dans laquelle le polymère de siloxane à fonction amine comprend le groupe OSiMe(CH₂)₃NH(CH₂)₂NH₂ ou OSiMe(CH₂)₃NH₂.

4. Composition selon l'une quelconque des revendications précédentes, dans laquelle de l'eau est présente en une quantité d'au moins 70 % en poids de la composition.

5. Composition selon l'une quelconque des revendications précédentes, dans laquelle le sel ionique est présent en une quantité allant jusqu'à 2 % en poids de la composition.

6. Composition selon l'une quelconque des revendications précédentes, comprenant en outre un polymère de siloxane exempt d'amine.

7. Composition selon la revendication 6, dans laquelle le total combiné des constituants du polymère de siloxane à fonction amine et du polymère de siloxane exempt d'amine est inférieur à 10 % en poids de la composition.

8. Composition selon la revendication 6 ou la revendication 7, dans laquelle le polymère de siloxane exempt d'amine est le polydiméthylsiloxane.

9. Composition selon l'une quelconque des revendications précédentes, comprenant en outre un silane.

10. Composition selon l'une quelconque des revendications précédentes, comprenant en outre un solvant hydrocarboné.

11. Composition selon l'une quelconque des revendications précédentes, comprenant en outre un ou plusieurs constituants choisis parmi un pigment et un biocide.

12. Utilisation d'une composition selon l'une quelconque des revendications précédentes pour le traitement hydrophobe d'un matériau de construction.

13. Utilisation d'une composition selon la revendication 12 pour le traitement hydrophobe du bois ou du bois de construction.

14. Procédé pour le traitement hydrophobe d'un matériau de construction, comprenant l'application audit matériau de construction d'une composition selon l'une quelconque des revendications 1 à 11.
